# EUROPÄISCHE PATENTSCHRIFT

(11) **EP 2 794 134 B1**
(45) Veröffentlichungstag und Bekanntmachung des Hinweises auf die Patenterteilung: **08.03.2017**
(21) Anmeldenummer: 12819051.9
(22) Anmeldetag: 20.12.2012
(51) Int. Cl.: B09B 3/00

(54) **VERFAHREN ZUR ENERGIEGEWINNUNG AUS ORGANIKHALTIGEN ABFALLSTOFFEN**
PROCESS FOR OBTAINING ENERGY FROM ORGANIC-CONTAINING WASTE MATERIALS
PROCÉDÉ DE PRODUCTION D'ÉNERGIE À PARTIR DE DÉCHETS À TENEUR EN MATIÈRES ORGANIQUES

(30) Priorität: 21.12.2011 AT 18602011
(43) Veröffentlichungstag der Anmeldung: 29.10.2014
(73) Patentinhaber: Commerzialbank Mattersburg im Burgenland Aktiengesellschaft, 7210 Mattersburg (AT)
(72) Erfinder: Philipp, Franz Josef, A-7212 Forchtenstein (AT)
(74) Vertreter: Patentanwälte Barger, Piso & Partner
(86) Internationale Anmeldenummer: PCT/AT2012/050202
(87) Internationale Veröffentlichungsnummer: WO 2013/090967

(56) Entgegenhaltungen:
- DE-A1- 3 329 771
- US-A- 5 087 375
- US-A1- 2010 137 126

## Beschreibung

Die vorliegende Erfindung betrifft ein Verfahren zur Energiegewinnung aus organikhaltigen Abfallstoffen.

Zum technologischen Hintergrund sind US 5,087,375, AT 389 474 B, CH 688 990 A5 und DE 33 29 771 A1 zu nennen. In der US 5,087,375 ist ein Verfahren zur Behandlung von gefährlichen und toxischen Abfallstoffen, die organische Stoffe und Metalle enthalten, zur Herstellung von unlöslichem industriellem Rohmaterial beschrieben, wobei die Abfallstoffe mit Kunststoffmaterial, das anorganische Verbindungen umfasst, die mit den Metallen stabile Verbindungen bilden, vermischt werden, aus der erhaltenen Kunststoffmischung Formkörper gebildet werden, die zur Entfernung des Kunststoffmaterials hitzebehandelt werden, und die verbleibenden anorganischen Stoffe durch Kalzinieren und Sintern zu stabilen, unlöslichen Komplexverbindungen gebunden werden.

Die AT 389 474 B offenbart die Verwendung von mineralischen, silikatischen/carbonatischen Feinteilen zur geordneten Ablagerung von feinsten und/oder pastösen Abfallstoffen, wobei die mineralischen Feinteile die Abfallstoffe umhüllen bzw. durchsetzen und eine Matrix bilden.

Die CH 688 990 A5 betrifft eine Aufbereitung organischer und oder anorganischer Reststoffe aus rekonstruierten Altdeponien und/oder Frischmüll zu einem wiederverwertbaren Stoff unter Schadstoffverfrachtung.

Die oben benannte DE 33 29 771 A1 die Bindung von Schadstoffen bei der Herstellung von Briketts aus organischen Produkten oder Abfallprodukten, wobei anorganische Verbindungen zugesetzt werden zur chemischen Bindung von Schadstoffen bei einem Pressvorgang bzw. bei der Pyrolyse/Verbrennung.

Die DE 10 2007 006 137 A1 offenbart ein Misch-Produkt aus organischen und anorganischen teilchenförmigen Stoffen und/oder Stoffgemischen, welche zusammen eine im Wesentlichen homogene Matrix bilden. Mit Hilfe eines Additivs (Hilfsstoffs) sind die möglichen Eigenschaften eines Endprodukts vorab kalkulierbar bzw. führt dieses Additiv zur Bildung von Kristallstrukturen mit hoher spezifischer innerer Oberfläche und erfüllt verschiedene zielgerichtete Funktionen, wie z.B. Energieträger oder Stoffe zur Energieumwandlung, Porosierungsmittel, Strukturierungsmittel, Reduktionsmittel und/oder Filterstoff.

Die Erfindung hat sich zum Ziel gesetzt, ein Verfahren zur Energiegewinnung aus organikhaltigen Abfallstoffen gemäß Oberbegriff von Anspruch 1 bereitzustellen, durch welches ein kohlenstoffhaltiges Produkt in fester, flüssiger und gasförmiger Form einem Tank zur Speicherung und/oder direkt einer Kraft-/Wärmekopplung zum Antrieb zur Verfügung gestellt wird.

Dieses Ziel wird erfindungsgemäß durch die im kennzeichnenden Teil von Anspruch 1 angegebenen Merkmale erreicht. Weitere Merkmale der Erfindung sind in den Unteransprüchen 2 bis 5 gekennzeichnet.

Der Vorteil der vorliegenden Erfindung liegt im Vergleich zu herkömmlichen Verfahren darin, dass derzeit nicht oder nur schwer verwertbare Abfälle in einem Energiegewinnungssystem aufbereitet werden können, um hochwertige Produkte wie Metalle, Silikate und Kohlenstoff bzw. Kohlenstoffverbindungen zu erhalten.

Die %-Angaben von Anteilen von Inhaltsstoffen oder Komponenten sind im Folgenden, wenn nicht anders angegeben, jeweils Gew.-% auf Trockensubstanz berechnet.

Unter "organikhaltigen Abfallstoffen" sind beispielsweise Hausmüll, Industriemüll, Klärschlämme, Papierfangstoffe und dgl. zu verstehen, die jedwede Art von organischem Material bzw. biologische Reststoffe, wie beispielsweise Papier, Holz, Textilien, Kunststoffe usw., enthalten. Dabei beträgt der Anteil von organischen Materialien in den einzelnen einsetzbaren Abfallstoffen bei Hausmüll mit 6000 - 12000 kJ/kg Trockensubstanz 70 - 90 %, bei Industriemüll mit 15000 - 36000 kJ/kg Trockensubstanz 50 - 90 %, bei Klärschlamm mit 1000 - 5000 kJ/kg Trockensubstanz 80 - 95 % und bei Papierfangstoffen mit 2000 - 8000 kJ/kg Trockensubstanz 75 - 95 %, wobei zumindest 40 % an organischen Materialien notwendig sind.

Unter "silikathaltigen Materialien", mit welchen die Abfallstoffe vermischt werden, sind beispielsweise Gerüstsilikate, silikatische Gesteine, wie z.B. verschiedenste granitische Gesteine, Vulkanite, Quarzsand, Bauschutt und dgl., zu verstehen.

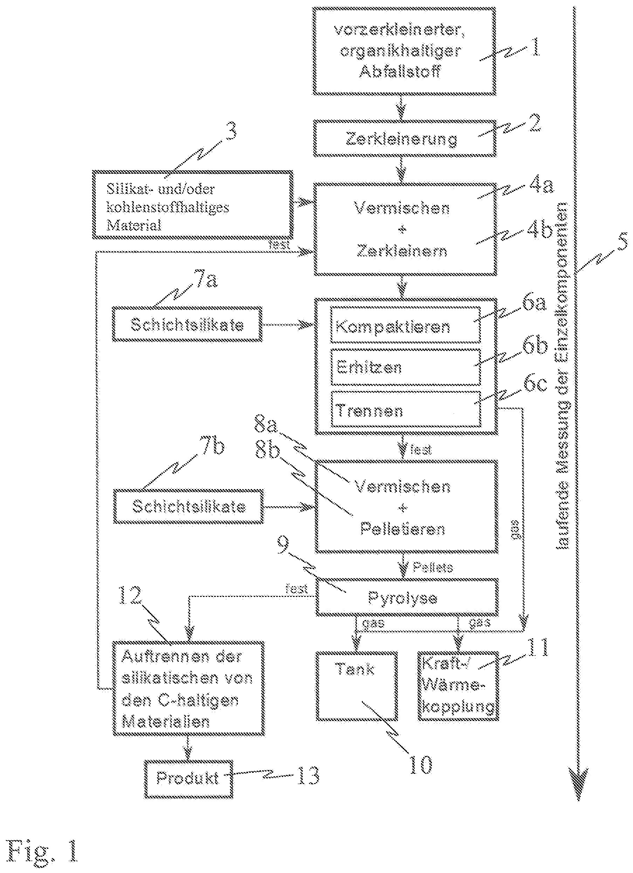

Die Erfindung wird im Folgenden anhand der Fig. 1, welche ein erfindungsgemäßes Ablaufdiagramm eines Verfahrens zur Energiegewinnung zeigt, näher erläutert.

Die organikhaltigen Abfallstoffe 1, die als Eingangsenergie dienen, werden vorzerkleinert und einer Messung der Inhaltsstoffe zur Identifizierung der Inhaltsstoffe sowie einer Ermittlung des Verhältnisses des Anteils an kohlenstoffhaltigem Material und des Anteils an silikatischem Material unterworfen. Die als Ausgangsmaterial verwendeten Abhallstoffe sollen so beschaffen sein, dass darin das Verhältnis von kohlenstoffhaltigem zu silikatischem Material etwa 90 % zu etwa 10 % ist. Bei Feststellung von von diesem Verhältnis abweichenden Werten muss kohlenstoffhaltiges und/oder silikatisches Material zugesetzt werden, bis das kohlenstoffhaltige und silikatische Material in den weiterzuverarbeitenden Abfallstoffen in dem Verhältnis 9:1 vorliegen. Dabei ist festzuhalten, dass die Einzelkomponenten der verwendeten Materialien einer laufenden Messung 5, während des gesamten Verfahrens, unterliegen. Die vorbehandelten organikhaltigen Abfallstoffe 1 werden aufgeschlossen bzw. weiter zerkleinert 2. Danach wird in einem fortgesetzten Zerkleinerungsschritt eine höhere Feinheit, bis in den µ-Bereich, unter Zugabe und Vermischung 4a von Gerüstsilikaten und/oder silikatischem Gesteinsmehl 3 als Additive, erreicht. Die Additive, beispielsweise auch Bauschutt, weisen einen höheren Härtegrad als die Abfallstoffe auf und wirken somit als Schleifmittel, wodurch bei weiterer Zerkleinerung 4b ein feinteiliges Mischprodukt aus anorganischen und organischen Stoffen, die dabei mittels Refinervermahlung aufgefasert werden, entsteht. Die Additive, die vorteilhafterweise auch silikatische Feinstoffe aus dem Hochofen sein können, werden mit einer Teilgröße von 0,001 bis 3 mm eingesetzt, wobei der Anteil an Stoffen mit einer Teilgröße von unter 50 µm bei ca. 40 % liegt.

Durch weitere Feinmahlung werden die einzelnen Teile des jeweiligen Stoffgemisches auf eine Größe von kleiner oder gleich 50 µm reduziert. Dabei beträgt der Anteil von Stoffen mit 3 mm Feinkorngröße, d.h. mit einem Durchmesser über 3 mm, zirka 5 % und der Anteil von Stoffen mit 1 mm Feinkorngröße zirka 8 %, der Rest weist eine Feinkorngröße mit einem Durchmesser von unter 1 mm auf, wobei der Hauptanteil eine Größe unter 100 µm besitzt. Dieses Feinkornverteilungsverhältnis ist relevant für die Stabilisierung der Mischung bzw. des Gerüstaufbaus.

Im Zuge der laufenden Überwachung des Verfahrensablaufes erfolgt eine Messung der Zusammensetzung bzw. Identifizierung der Einzelkomponenten 5 der hergestellten, zerkleinerten bzw. vermahlenen Mischung via Pulverdiffraktogramm, um im nachfolgenden Verfahrensschritt ein gezieltes Kompaktieren 6a, Erhitzen 6b und anschließendes Trennen 6c der Einzelkomponenten zu ermöglichen. Im Wesentlichen werden hierbei verschiedene Messungen durchgeführt, wodurch folgende Daten erhalten werden:
- die Mahlfeinheit,
- der Verteilungsindex,
- das Gewicht,
- die Feuchtigkeit,
- der pH-Wert.

Die elementare Zusammensetzung des aufbereiteten Rohstoffs wird durch RöntgenFluoreszenz-Analyse (RFA) kontinuierlich bestimmt, insbesondere wird der Kohlenstoffgehalt bestimmt.

Diese ermittelten Daten gehen in einen Prozessrechner ein und werden mit aufgaben- bzw. materialabhängigen Werten verglichen, wodurch gezielt das Kompaktieren 6a, Erhitzen 6b und anschließendes Trennen 6c der Einzelkomponenten möglich ist, wobei, so nicht bereits im silikatischen Material enthalten, Zuschlagsstoffe aus Schichtsilikaten 7a, wie Ton mit mindestens 50 % Eisen zugesetzt werden müssen. Vorzugsweise werden hierbei eisenreiche bzw. Eisen ähnliche Kationen haltige Schichtsilikate, vorzugsweise aus der Gruppe von mafitischen Schichtsilikatmineralien, wie Chlorite, Smektite, Illit, Biotit und dgl. eingesetzt. Die Kompaktierung 6a ist dabei von der Feuchtigkeit, der Temperatur, dem CO₂-Gehalt und dem Schichtsilikatanteil abhängig, wobei vorliegendenfalls gebildetes CO₂ als Druckmedium dient.

Das Gemisch aus Abfallstoffen wird in einer Vorkammer unter Druck kompaktiert 6a, wobei die Vorkammer desweiteren eine (hydro)zyklonartige Kammer umfasst, in welcher durch Erhitzung 6b eine Trennung 6c von Metallen (Schwermetallen), Silikaten und kohlenstoffhaltigen Stoffen nach dem spezifischen Gewicht, dem Schmelzpunkt und der Leitfähigkeit erfolgt. Mit anderen Worten erfolgt eine Trennung 6c, analog zu der in einer Zentrifuge, wobei sich die bei der Erhitzung 6b, bei der die über die mafitischen Schichtsilikate eingeführten Kationen, wie Eisen oder eisenähnliche Kationen unter Reduktion von CO₂ oxidiert werden, entstandenen Teilchen, so auch solche oxidierte Kationen aufweisende Teilchen durch eine Rotationsbewegung nach außen bewegen, wodurch eine mechanische Trennung in einzelne fest-, flüssig- und gasförmige Phasen mithilfe der Fliehkraft erfolgt. Dies geschieht in Abhängigkeit der Stoffe, üblicherweise bei 40 °C bis 850 °C, wobei die Stoffe sich in der (hydro)zyklonartigen Kammer in einem Vakuum befinden. Die Flüssigphase besteht überwiegend aus verflüssigtem organischen Material (Kunststoffmaterial). Dabei ist zu beachten, dass unter den Stoffteilchen mit einem spezifischen Gewicht (Wichte) von ≤ 0,09 N/m³ (Gewichtskraft zum Volumen) ein Restsilikatanteil von 1,4 bis 1,7 %, maximal jedoch 5 %, verbleibt. Die resultierende gasförmige Phase wird direkt einem Tank 10 und/oder einer Kraft-/Wärmekopplung 11 zur Verfügung gestellt.

Durch die Kompaktierung 6a unter Eigenfeuchte des Gemischs wird die Teilchengröße des Gemischs aus Abfallstoffen und zugesetztem silikatischem Material so gestaltet, dass die Zwischenräume zwischen den kompaktierten Teilchen eine Wärmezuführung gewährleisten. Die Größe der Teilchen bzw. deren Dichte bestimmt somit den Reduktions/Oxidationsprozess und die Reaktionszeit. Das Volumenverhältnis kompaktierter Masse zu den Zwischenräumen beträgt in der mittels der zugesetzten Schichsilikate erzielten gerüst-/skelettartigen festen Masse in der Regel in etwa 2 zu 3.

Die Funktionsweise der (hydro)zyklonartigen Kammer zur Trennung der Einzelkomponenten der kompaktierten Masse, erfolgt im Wesentlichen analog zu der einer Zentrifuge. Da sich die Teilchen in der Kammer nach außen bewegen, erfolgt eine Sortierung der Teilchen nach dem spezifischen Gewicht. In Abhängigkeit des jeweiligen spezifischen Gewichts treten die durch einen Stoffstrom mitgenommenen Teilchen im Randbereich der Kammer an genau festgelegten Austrittspunkten aus, wodurch eine exakte Trennung der Einzelkomponenten erfolgt. Der Stoffstromträger ist dabei üblicherweise angereichertes CO₂-Gas, um den Wärmeverlust während des Prozesses so gering wie möglich zu halten.

Die Trennung 6c der gesamten Masse des erzeugten Rohstoffes erfolgt unter Luftabschluss, durch eine Ausschleusung mittels Vakuumpumpe über das spezifische Gewicht, die das Material in geschlossene Silos fördert, wobei eine Trennung in eine reine kohlenstoffhaltige Komponente und eine reine Silikat-Komponente erfolgt.

Im Übergang von der Vorkammer zu einer Hauptkammer werden den Feststoffen feinteilige Schichtsilikate 7b, beispielsweise Ton(e) bzw. tonmineralisches Material als Bindemittel, beigemischt bzw. damit vermischt 8a, wobei die Feststoffmasse wiederum einen Gehalt an kohlenstoffhaltigem Material von ca. 90 % und einen solchen an silikatischem Material von ca. 10 % erreichen bzw. aufweisen soll, um durch Pelletierung 8b Pellets herzustellen. Bei den feinkörnigen Schichtsilikaten 7b handelt es sich beispielsweise um Tonminerale oder tonmineralreiche Materialien, wie z.B. Kaolin, Montmorillonit oder Bentonit. Dabei weisen die Schichtsilikate 7b eine Bindemittelwirkung nur im feuchten Zustand, vorzugsweise bei einem Feuchtegehalt von in etwa 15 bis 25 %, auf. Überdies unterstützen die Schichtsilikate 7b die Trennung der einzelnen Komponenten.

Die Pelletierung 8b hat zum Ziel, die Förderbarkeit der Feststoffe zu gewährleisten, wozu die Feststoffe genau definierte Partikelgröße, Partikelinhalt und Feuchtigkeit aufweisen müssen.

In der Hauptkammer wird das in Form von Pellets vorliegende Materialgemisch einer Pyrolyse 9 in der Regel bei 600 °C bis 800 °C unterworfen, wobei auch eine Phasentrennung und somit eine Aufspaltung der gasförmigen und festen Stoffe, durch deren unterschiedliche Dichte, unter Luftabschluss erfolgt.

In der Regel erfolgt die Auftrennung durch einen (Hydro)-Zyklon, der das Prozessgut aus dem Reaktor über eine Vakuumpumpe zugeführt bekommt. Als Strommengenträger werden vorzugsweise CO₂-Gase eingesetzt, die eine hohe Energiebilanz gewährleisten. Die Energie wird bei diesem Verfahren nicht in den Schornstein geblasen und geht verloren, sondern wird prozesseffektiv genutzt. Ein weiterer Vorteil ist, dass die Kohlenstoffverbindungen im Gasgemisch über einen Wärmetauscher die Energie gezielt abgeben und somit direkt genutzt werden. Grundsätzlich gibt es weitere Trennmöglichkeiten, wie Rütteltisch oder Aufstromklassierer, wobei jedoch sämtliche Trennmöglichkeiten immer unter Luftabschluss zu erfolgen haben.

Die getrennten gasförmigen und festen Stoffe werden daraufhin separat weiterverarbeitet.
Die verbleibenden gasförmigen Stoffe werden dem Tank 10 oder der Kraft-/Wärmekopplung 11 zugeführt, während die verbleibenden Feststoffe unter Ausnutzung unterschiedlicher Dichten in silikatisches und kohlenstoffhaltiges Material aufgetrennt 12 werden, wobei das silikatische Material in die erste Verfahrensstufe des Vermischens 4a und Zerkleinerns 4b der Abfallstoffe 1 rückgeführt werden kann und der kohlenstoffhaltige Anteil als Produkt 13 gespeichert oder direkt der Kraft-/Wärmekopplung 11 zugeführt wird.

Der verbleibende Rückstand bildet ein wiedereinsetzbares silikatisches Bindemittel, welches rückgeführt und als Gerüstsilikat beim Zerkleinern 4b der organikhaltigen Abfallstoffe 1 genutzt werden kann.

In weiteren Ausführungsformen der Erfindung können verschiedene einzelne Verfahrensschritte weggelassen und zum Teil durch vergleichbare ersetzt werden, das grundsätzliche Ziel der Energiegewinnung wird dadurch nicht beeinflusst.

Anhand der nachfolgenden Beispiele wird der Gegenstand vorliegender Erfindung näher erläutert.

### Beispiel 1

Autoschredderleichtfraktion, die das beim Schreddern von Altautos nach magnetischer Entfernung von Metallteilchen anfallende organikhaltige Material umfasst, in vorzerkleinerter Form wird in einer Menge von 92 % mit Sanden, Tonen und Kalkresten in einer Menge von insgesamt 8 %, jeweils bezogen auf das Gewicht der Trockenmasse, gemischt und zerkleinert. Unter fortgesetztem Mischen und weiterer Zerkleinerung erfolgt ein Aufschließen der Mischungsteilchen in den µ Bereich, wobei durch laufende Messung die Anteile an kohlenstoffhaltigem Material und silikatischem Material ermittelt werden. Vom ermittelten Verhältnis der Anteile abhängig werden bei fortgesetzter Zerkleinerung unter Faserbildung des organikhaltigen Materials in einem Refinerprozess Gerüstsilikate, vorliegendenfalls Bims zugemischt, so dass das Verhältnis von kohlenstoffhaltigem Material und silikatischem Material etwa 9 : 1 beträgt.

Dieses vorverarbeitete Mischgut wird in einer Vorkammer unter Zugabe von etwa 20 % mafitischem, feinstteiligem Schichtsilikat, vorliegendenfalls Chlorit, bezogen auf den Gesamtsilikatanteil unter Bildung eines porös bleibenden Kuchens kompaktiert und unter Luftabschluss fortschreitend auf etwa 500° C erhitzt. Dadurch zerfällt der Kuchen, wobei in einer zyklonartigen Kammer eine Trennung in die einzelnen Aggregatzustände erfolgt. Die Gasphase wird ebenso wie die aus verflüssigtem Organikmaterial (Kunststoffe) gebildete Flüssigphase in Tanks zu ihrer weiteren Verwertung gespeichert. Der verbleibende Feststoff wird mit weiteren Schichtsilikaten, vorliegendenfalls Montmorillonit versetzt und vermischt und pelletiert. Die gebildeten Pellets, deren Silikatanteile ca. 2,8 % betragen, werden anschließend einer Pyrolyse unter anaeroben Bedingungen bei etwa 530° C unterworfen. Dabei zerfallen die aus gerüst-/skelettartigen Material aufgebauten Pellets in feine Teilchen, wobei wiederum eine Auftrennung in Gas-, Flüssig- und Festphasen erfolgt. Das abgetrennte silikatische Material wird als Rohstoff in das System zur Wiederverwendung recycelt. Die kohlenstoffhaltigen Materialien werden zur Energieverwertung gespeichert oder direkt einer Kraft-Wärme-Kopplung zugeführt.

### Beispiel 2

Organischer Hausmüll (Kunststoff, Leder usw.) in vorzerkleinerter Form in einer Menge von etwa 85 % wird mit Bauschutt (Gipskartonplatten usw.) in einer Menge von etwa 15 % bezogen auf das Gewicht der Trockenmasse vermischt und zerkleinert und weiter im Wesentlichen der Verfahrensführung gemäß Beispiel 1 mit Ausnahme der nachfolgend angegebenen Bedingungen und Parameter unterworfen:
i) Als im Refinerprozess zugesetztes Gerüstsilikat wird vorliegendenfalls Perlit verwendet.
ii) Chlorit als mafitisches Schichtsilikat wird vorliegendenfalls in einer Menge von etwa 15 % bezogen auf den Gesamtsilikatanteil zugesetzt.
iii) Nach Abtrennung von Gas- und Flüssigphase wird der verbleibende Feststoff mit Kaolin als weiteres Schichtsilikat versetzt.
iv) Die Pellets weisen einen Silikatanteil von etwa 1,9 % auf.
iiv) Die Pyrolyse erfolgt bei einer Temperatur von etwa 610° C.

### Beispiel 3

Papierschlämme in einer Menge von etwa 78 % wird mit Papierfangstoffen mit einem Silikatanteil von ca. 40 %, was ca. 10 % bezogen auf die Gesamtmasse ausmacht, in einer Menge von etwa 22 %, jeweils bezogen auf das Gewicht der Trockenmasse vermischt und zerkleinert und weiter im Wesentlichen der Verfahrensführung gemäß Beispiel 1 mit Ausnahme der nachfolgend angegebenen Bedingungen und Parameter unterworfen:
i) Als im Refinerprozess zugesetztes Gerüstsilikat wird vorliegendenfalls granitisches Gesteinsmehl verwendet.
ii) Als mafitisches Schichtsilikat wird vorliegendenfalls Biotit in einer Menge von etwa 17 % bezogen auf den Gesamtsilikatanteil zugesetzt.
iii) Nach Abtrennung von Gas- und Flüssigphase wird der verbleibende Feststoff mit Bentonit als weiteres Schichtsilikat versetzt.
iv) Die Pellets weisen einen Silikatanteil von etwa 2,4 % auf.
iiv) Die Pyrolyse erfolgt bei einer Temperatur von etwa 585° C.

## Patentansprüche

1. Verfahren zur Energiegewinnung aus organikhaltigen Abfallstoffen (1), wobei
a) die organikhaltigen Abfallstoffe (1) in vorzerkleinerter Form einer Messung zur Identifizierung der Inhaltsstoffe sowie einer Ermittlung des Verhältnisses des Anteils an kohlenstoffhaltigem Material und des Anteils an silikatischem Material unterworfen werden, um durch allfälliges Zumischen von kohlenstoffhaltigem und/oder silikatischem Material (3) sicherzustellen, dass das Verhältnis von kohlenstoffhaltigem zu silikatischem Material etwa 90 % zu etwa 10 % in den weiterzuverarbeitenden Abfallstoffen ist,
b) in weiterer Verfahrensfolge eine laufende Messung der Anteile (5) von kohlenstoffhaltigem Material und silikatischem Material durchgeführt wird,
c) die organikhaltigen Abfallstoffe (1) weiter zerkleinert (2) und mit zusätzlichen gerüstsilikathaltigen Materialien (3) bei fortgesetzter Zerkleinerung (4b) bis in den µ-Bereich vermischt (4a) werden,
d) Kompaktieren (6a) der zerkleinerten Abfallstoffmischung unter Zugabe von Schichtsilikaten (7a), Erhitzen (6b) der Mischung und Trennen (6c) derselben in einzelne fest-, flüssig- und gasförmige Phasen im Vakuum erfolgt, worauf die zurückbleibenden Feststoffe mit weiter zugesetzten Schichtsilikaten (7b) vermischt (8a) und pelletiert (8b) werden,
e) die hergestellten Pellets einer Pyrolyse (9) unterworfen werden, und
f) die bei der Pyrolyse gewonnenen gasförmigen Stoffe einem Tank (10) und/oder einer Kraft-/Wärmekopplung (11) zugeführt werden,
**dadurch gekennzeichnet, dass**
g) die bei der Pyrolyse gewonnenen Feststoffe eine Auftrennung (12) silikatischer von kohlenstoffhaltigen Materialen durchlaufen, wobei die daraus gewonnenen kohlenstoffhaltigen Materialien als Endprodukt (13) gespeichert werden.

2. Verfahren nach Anspruch 1, **dadurch gekennzeichnet, dass** die Messung der Einzelkomponenten (5) mittels Pulverdiffraktogramm erfolgt.

3. Verfahren nach Anspruch 1, **dadurch gekennzeichnet, dass** die bei der Auftrennung (12) des silikatischen von dem kohlenstoffhaltigen Material gewonnenen silikathaltigen Materialen in Stufe a) rückgeführt werden.

4. Verfahren nach Anspruch 1, **dadurch gekennzeichnet, dass** die durch die Trennung (6c) in Stufe d) gewonnenen gasförmigen Stoffe, gegebenenfalls zusammen mit den in Stufe c) gewonnenen gasförmigen Stoffen, dem Tank (10) und/oder der Kraft/Wärmekopplung zugeführt werden.

5. Verfahren nach Anspruch 1, **dadurch gekennzeichnet, dass** die Trennung (6c) in Stufe d) der festen, flüssigen und gasförmigen Stoffe über eine Rotationsbewegung erfolgt.

## Claims

1. A process for energy recovery from organics-containing waste materials (1), whereby
a) the organics-containing waste materials (1) in pre-comminuted form are subjected to a measurement for identifying the constituents and also to determination of the ratio of the fraction of carbonaceous material to the fraction of silicatic material, in order to ensure, by admixing carbonaceous and/or silicatic material (3) where appropriate, that the ratio of carbonaceous to silicatic material is about 90% to about 10% in the waste materials for further processing,
b) as the process continues, there is ongoing measurement of the fractions (5) of carbonaceous material and silicatic material,
c) the organics-containing waste materials (1) are further comminuted (2) and mixed (4a) with additional tectosilicate-containing materials (3), with continued comminution (4b) down into the µ range,
d) compacting (6a) of the comminuted waste material mixture is carried out, with addition of phyllosilicates (7a), heating (6b) of the mixture and separation (6c) thereof into individual solid, liquid and gaseous phases under reduced pressure, after which the solids which remain are mixed (8a) with further-added phyllosilicates (7b) and are pelletized (8b),
e) the pellets produced are subjected to pyrolysis (9), and
f) the gaseous substances obtained in this pyrolysis are supplied to a tank (10) and/or to a combined heat and power process (11),
**characterised in that**
g) the solids recovered by the pyrolysis undergo separation (12) of silicatic from carbonaceous materials, with the carbonaceous materials recovered therefrom being stored as end product (13).

2. The process of claim 1, **characterised in that** the individual components (5) are measured by means of powder diffractogram.

3. The process of claim 1, **characterized in that** the silicate-containing materials obtained when separating (12) the silicatic material from the carbonaceous material are returned to stage a).

4. The process of claim 1, **characterized in that** the gaseous substances obtained by the separation (6c) in stage d), optionally together with the gaseous substances obtained in stage c), are supplied to the tank (10) and/or to the combined heat and power process (11).

5. The process of claim 1, **characterized in that** the separation (6c) in stage d) of the solid, liquid, and gaseous substances takes place by way of a rotational movement.

## Revendications

1. Procédé pour la récupération d'énergie à partir de déchets (1) contenant des substances organiques, dans lequel
a) on soumet des déchets (1) contenant des substances organiques, sous forme prébroyée, à une mesure pour identifier les constituants, et à une détermination du rapport entre la proportion du matériau contenant du carbone et la proportion du matériau contenant des silicates, pour s'assurer que, sous l'effet de l'éventuelle addition d'un matériau (3) contenant du carbone et/ou contenant des silicates, le rapport du matériau contenant du carbone au matériau contenant des silicates est d'environ 90 % à environ 10 % dans les déchets destinés à une post-transformation,
b) dans la suite du procédé, on met en oeuvre une mesure continue des proportions (5) du matériau contenant du carbone et du matériau contenant des silicates,
c) on soumet à un broyage plus poussé (2) les déchets (1) contenant des substances organiques, et on les mélange (4a) à des matériaux supplémentaire (3) contenant des silicates en structure de charpente spatiale, tout en poursuivant le broyage (4b) jusqu'au domaine micrométrique,
d) on procède au compactage (6a) du mélange de déchets broyés, avec addition de phyllosilicates (7a), à un chauffage (6b) du mélange et à une séparation (6c) de ce dernier en des phases individuelles solide, liquide et gazeuse, ce après quoi on mélange (8a) les solides résiduels à des phyllosiliates (7b) ajoutés en plus, et on les pastille (8b),
e) on soumet à une pyrolyse (9) les pastilles fabriquées, et
f) on envoie les substances gazeuses obtenues lors de la pyrolyse dans une cuve (10) et/ou à un couplage force/chaleur (11),
**caractérisé en ce que**
g) les substances solides obtenues lors de la pyrolyse passent par une unité (12) de séparation des matériaux contenant des silicates d'avec les matériaux contenant du carbone, les matériaux contenant du carbone obtenus de cette manière étant stockés sous forme d'un produit fini (13).

2. Procédé selon la revendication 1, **caractérisé en ce que** la mesure des composants individuels (5) s'effectue à l'aide d'un diffractogramme par la méthode des poudres.

3. Procédé selon la revendication 1, **caractérisé en ce que** les matériaux contenant des silicates, obtenus lors de la séparation (12) du matériau contenant des silicates d'avec le matériau contenant du carbone, sont renvoyés dans l'étape a).

4. Procédé selon la revendication 1, **caractérisé en ce que** les substances gazeuses obtenues sous l'effet de la séparation (6c) dans l'étape d) sont, éventuellement en même temps que les substances gazeuses obtenues dans l'étape c), envoyées à la cuve (10) et/ou au couplage force/chaleur (11).

5. Procédé selon la revendication 1, **caractérisé en ce que** la séparation (6c) dans l'étape d), des substances solides, liquides et gazeuses, a lieu grâce à un mouvement de rotation.
